(19) Europäisches Patentamt / European Patent Office / Office européen des brevets

(11) **EP 4 357 100 B1**

(12) **EUROPEAN PATENT SPECIFICATION**

(45) Date of publication and mention
of the grant of the patent:
**06.08.2025 Bulletin 2025/32**

(21) Application number: **22861711.4**

(22) Date of filing: **24.08.2022**

(51) International Patent Classification (IPC):
**B29C 51/04** *(2006.01)*     **B29C 51/28** *(2006.01)*
**B29C 43/02** *(2006.01)*     **B29C 43/12** *(2006.01)*
**B29C 51/26** *(2006.01)*     **B29L 31/34** *(2006.01)*

(52) Cooperative Patent Classification (CPC):
**H01M 50/105; B29C 43/02; B29C 43/12;**
**B29C 51/04; B29C 51/28; H01M 50/121;**
B29C 43/04; B29C 43/58; B29C 51/06;
B29C 51/085; B29C 51/262; B29C 2043/3222;
B29C 2043/5808; B29C 2791/001; B29C 2791/007;
(Cont.)

(86) International application number:
**PCT/KR2022/012642**

(87) International publication number:
**WO 2023/027502 (02.03.2023 Gazette 2023/09)**

(54) **MOLDING APPARATUS, MOLDING METHOD**

FORMVORRICHTUNG, FORMVERFAHREN

APPAREIL DE MOULAGE, PROCÉDÉ DE MOULAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2021   KR 20210111974**

(43) Date of publication of application:
**24.04.2024   Bulletin 2024/17**

(73) Proprietor: **LG Energy Solution, Ltd.
Seoul 07335 (KR)**

(72) Inventor: **LEE, Ji Hoon
Daejeon 34122 (KR)**

(74) Representative: **Plasseraud IP
104 Rue de Richelieu
CS92104
75080 Paris Cedex 02 (FR)**

(56) References cited:
**JP-A- 2008 265 158     JP-A- H 058 291
JP-A- H0 524 104     KR-A- 20170 091 938
KR-A- 20180 134 133     KR-A- 20190 098 581
KR-A- 20210 038 230     KR-B1- 102 146 189
US-A1- 2020 083 493**

(52) Cooperative Patent Classification (CPC): (Cont.)
B29L 2031/3468; B29L 2031/7146; Y02E 60/10;
Y02P 70/50

**Description**

<u>TECHNICAL FIELD</u>

<u>CROSS-REFERENCE TO RELATED APPLICATION</u>

<u>TECHNICAL FIELD</u>

The present invention relates to a molding apparatus and method for molding a cup part in a pouch film, and more particularly, to a pouch-type battery case manufactured thereby and a secondary battery including the pouch-type battery case.

<u>BACKGROUND ART</u>

In general, secondary batteries include nickel-cadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

In general, a pouch-type battery case is manufactured by performing press processing on a pouch film having flexibility to form a cup part. In addition, when the cup part is formed, an electrode assembly is accommodated in the cup part, and then, a side of the cup part is sealed to manufacture a secondary battery.

In the press processing, draw-molding is performed by inserting a pouch film into a molding device such as a press equipment and applying a pressure to the pouch film by using a punch to draw the pouch film. Hereinafter, this will be described in more detail.

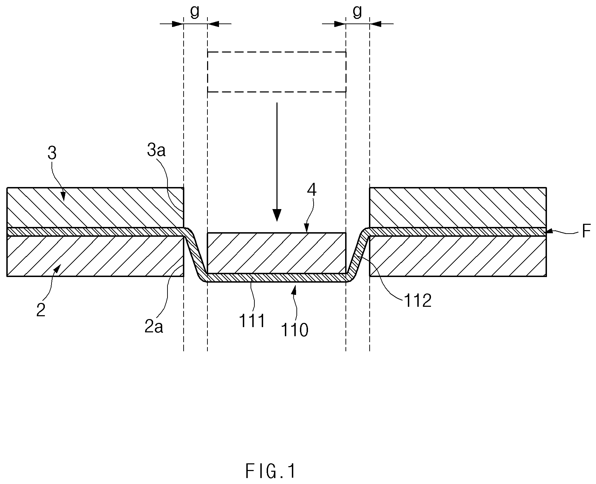

FIG. 1 is a schematic view of a molding apparatus according to a related art.

A molding apparatus according to the related art include a die 2 in which a pouch film F is seated, and a molding space 2a is defined, a stripper 3 disposed above the die 2 to fix the pouch film F and having an opening 3a, a punch 4 that elongates the pouch film F through the opening 3a. In addition, when the die 2 and the stripper 3 ascend with respect to the punch 4, or the punch 4 descends with respect to the die 2 and the stripper 3, the punch 4 may apply a pressure to the pouch film F so that a portion of the pouch film F is elongated into the molding space 2a, and thus, a cup part 110 may be defined in the pouch film F.

However, in the molding apparatus according to the related art, to prevent the pouch film F from being pushed or damaged by frictional force in the process in which the punch 4 and the die 2 move relative to each other, a predetermined clearance g is required between an inner circumference of the punch 4 and an outer circumference of the molding space 2a. Thus, a circumferential surface 112 of the cup part 110, which is defined in the pouch film F, may be inclined with respect to a bottom surface 111 of the cup part 110. As a result, an empty space occupied by an electrode assembly (not shown) is generated in the cup part 110, and thus, there is a problem in that energy density of the secondary battery is reduced.

In addition, in the molding apparatus according to the related art, when the punch 4 presses the pouch film F, stress is concentrated at a corner of the punch 4. Thus, when the cup part 110 is deeply formed in the pouch film F, there is a problem in that a corner of the cup part 110 is excessively elongated, and thus, a remaining thickness becomes thin, and cracks or pin-holes occur at a corner of the cup part 110.

In addition, there is a problem in that the circumferential surface 112 of the cup part 110, which is defined by the molding apparatus according to the related art is not sufficiently elongated, and thus, compressive force acts to cause wrinkles due to buckling.

Documents JP H05 8291 A, JP H05 24104 A, US 2020/083493 A1 disclose molding apparatus according to the related art.

<u>DISCLOSURE OF THE INVENTION</u>

<u>TECHNICAL PROBLEM</u>

One object of the present invention for solving the above problems is to provide a molding apparatus and method, in which a remaining thickness of a corner of a cup part is maintained to be thick while molding the cup part having a sufficiently deep depth.

Another object of the prevent invention for solving the above problems is to provide a pouch-type battery case manufactured by the molding apparatus and method, and a secondary battery including the pouch-type battery case.

## TECHNICAL SOLUTION

A molding apparatus according to an embodiment of the present invention may mold a cup part in a pouch film. The molding apparatus may include: a die on which the pouch film is seated on a top surface thereof and in which a first space recessed from the top surface is defined; a stripper which is disposed above the die to fix the pouch film and in which a second space is defined at a position corresponding to the first space; and a pressing part configured to apply a pneumatic or hydraulic pressure to the pouch film so that a portion of the pouch film is elongated into the first space.

The stripper may be provided with a cover part configured to seal the second space at an upper side, a passage through which the pressing part and the second space communicate with each other may be provided in the stripper or the cover part, and the pressing part may control an internal pressure of the second space by introducing or discharging a gas through the passage.

The molding apparatus may further include: a flexible bag disposed in the second space so as to be in contact with the pouch film; and a bag body which is configured to seal the second space, to which the flexible bag is connected, and in which a passage through which the pressing part and the flexible bag communicate with each other is provided. The pressing part may control an internal pressure of the flexible bag by introducing or discharging a fluid through the passage.

The molding apparatus further includes a first punch inserted into the first space and having a curved surface that is convex toward the pouch film.

The curved surface may have the highest central portion and a height that gradually decreases toward an inner circumference of the first space.

In the state in which the first punch is inserted into the first space, the central portion of the curved surface may be disposed at a height lower than that of a top surface of the die.

The first space may have a first width in a first direction and a second width in a second direction orthogonal to the first direction, and the curved surface may be a portion of an ellipsoid.

$$(\frac{x}{a})^2 + (\frac{y}{b})^2 + (\frac{z}{c})^2 = 1$$

(where x is a coordinate in the first direction, y is a coordinate in the second direction, z is coordinates in a vertical direction, a is a half of the first width, b is a half of the second width, and c is a value obtained by multiplying an average value of the values a and b by a correction constant k of 0.2 to 0.6)

The molding apparatus further includes a second punch inserted into the first space and having a plane facing the pouch film.

The pressing part may apply a higher pressure in a state in which the second punch is inserted into the first space when compared to a state in which the first punch is inserted into the first space.

A height difference between the plane and the top surface of the die when the second punch is inserted into the first space may be greater than a height difference between the curved surface and the top surface of the die when the first punch is inserted into the first space.

The molding apparatus may further include: a lower body which is disposed below the die and in which a third space communicating with the first space is defined; a flexible bag disposed in the third space and expanded into the first space so as to be in contact with the pouch film; a bag body which is configured to seal the third space and to which the flexible bag is connected; and a sub pressing part configured to control an internal pressure of the flexible bag by introducing or discharging a fluid through a passage provided in the bag body.

A molding method according to an embodiment of the present invention may mold a cup part in a pouch film. The molding method may include: a preparation process in which the pouch film is inserted between a die and a stripper; a fixing process in which the stripper fixes the pouch film; and a pressing process in which a pressing part applies a pneumatic or hydraulic pressure to the pouch film through a second space formed in the stripper so that a portion of the pouch film is elongated into a first space formed in the die.

The pressing process may include: a primary molding process in which a first punch having a curved top surface is inserted into the first space of the die, and a portion of the pouch film is in close contact with the curved surface, wherein the curved surface is convexly formed upward; and a secondary molding process in which a second punch having a planar top surface is inserted into the first space, and a portion of the pouch film is in close contact with the plane.

A pressure applied to the pouch film in the secondary molding process may be greater than that applied to the pouch film in the primary molding process.

A molding method according to an embodiment of the present invention may mold a cup part in a pouch film. The molding method may include: a preparation process in which the pouch film is inserted between a die and a stripper; a fixing process in which the stripper fixes the pouch film; and a pressing process of applying a pneumatic or hydraulic pressure to the pouch film so that a portion of the pouch film is elongated into a first space formed in the die to mold a cup part. The pressing process may include: a preliminary molding process in which a first flexible bag disposed in a second space formed in the stripper elongates the pouch film into the first space; a primary molding process in which a second flexible bag is expanded into the first space to press a portion of the pouch film so that a portion of the pouch film is formed is convexly formed upward; and a secondary molding process in which internal pressures of the first flexible bag and the second flexible bag are adjusted to be the same so that a portion of the pouch film is flatly formed.

In the primary molding process, the internal pressure of the second flexible bag may be greater than that of the first flexible bag.

The internal pressure of each of the first flexible bag and the second flexible bag in the secondary molding process may be greater than that of the second flexible bag in the primary molding process.

A pouch-type battery case according to an embodiment of the present invention may include: a cup part having a recessed shape; and a terrace disposed on at least a portion of a circumference of the cup part. The cup part may include: a bottom surface; a plurality of circumferential surfaces configured to connect the bottom surface to the terrace; and a corner on which a pair of circumferential surfaces, which are adjacent to each other, among the plurality of circumferential surfaces and the bottom surface meet each other. A thickness of the corner may be 0.75 times to 0.85 times a thickness of the bottom surface.

An angle defined by the circumferential surface with respect to the bottom surface or the terrace may be 90 degrees to 95 degrees.

The corner may have a curvature radius of 0.75 mm to 1.25 mm.

The cup part may further include: a first edge on which the circumferential surface and the terrace meet each other and which is rounded; and a second edge on which the bottom surface and the circumferential surface meet each other and which is rounded. A clearance between the first edge and the second edge may be 0.1 mm or less.

Each of the first edge and the second edge may have a curvature radius of 0.1 mm or more and less than 0.5 mm.

The cup part may further include: a first edge on which the bottom surface and the circumferential surface meet each other and which is rounded; and a second edge on which the circumferential surface and the terrace meet each other and which is rounded. A clearance between the first edge and the second edge may be less than a curvature radius of each of the first edge and the second edge.

A secondary battery according to an embodiment of the present invention may include: an electrode assembly; and a pouch-type battery case comprising a cup part having a recessed shape and a terrace disposed on at least a portion of a circumference of the cup part. The cup part may include: a bottom surface; a plurality of circumferential surfaces configured to connect the bottom surface to the terrace; and a corner on which a pair of circumferential surfaces, which are adjacent to each other, among the plurality of circumferential surfaces and the bottom surface meet each other. A thickness of the corner may be 0.75 times to 0.85 times a thickness of a central portion of the bottom surface.

## ADVANTAGEOUS EFFECTS

According to the preferred embodiment of the present invention, since the pouch film is elongated by the pneumatic or hydraulic pressure to mold the cup part, the concentration of the stress to the corner of the cup part may be minimized. Thus, even if the cup part is molded deeply, the remaining thickness of the corner may be maintained to be thick, and the cracks or pinholes may be prevented from occurring in the corner.

In addition, the circumferential surface of the cup part may be sufficiently elongated during the process of molding the cup part. Thus, the wrinkles due to the buckling may be prevented from occurring on the circumferential surface of the cup part.

In addition, the curvature radius of each of the edge and corner of the cup part may be minimized, and the circumferential portion of the cup part may be formed close to the vertical. Therefore, the outer appearance of the secondary battery may be sharp, and the energy density may be improved.

The effects of the prevent invention are not limited by the aforementioned description, and thus, more varied effects are involved in this specification.

## BRIEF DESCRIPTION OF THE DRAWINGS

FIG. 1 is a schematic view of a molding apparatus according to a related art.
FIG. 2 is a schematic view of a molding apparatus according to an embodiment of the present invention.
FIG. 3 is a bottom view of a die according to an embodiment of the present invention.
FIG. 4 is a flowchart illustrating a molding method performed using the molding apparatus according to an embodiment of the present invention.
FIGS. 5a to 5c are views for explaining an operation of the molding apparatus according to an embodiment of the present invention.
FIG. 6 is an exploded perspective view of a secondary battery according to an embodiment of the present invention.
FIG. 7 is an enlarged view of a portion 'A' of FIG. 6.
FIG. 8 is a cross-sectional view illustrating the inside of the secondary battery according to an embodiment of the present invention.
FIG. 9 is an enlarged view of a portion 'B' of FIG. 8.
FIG. 10 is a schematic view of a molding apparatus according to another embodiment of the present invention.
FIG. 11 is a schematic view of a molding apparatus according to further another embodiment of the present invention.
FIG. 12 is a flowchart illustrating a molding method performed using the molding apparatus according to further another embodiment of the present invention.
FIGS. 13a to 13c are views for explaining an operation of the molding apparatus according to further another embodiment of the present invention.

## MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

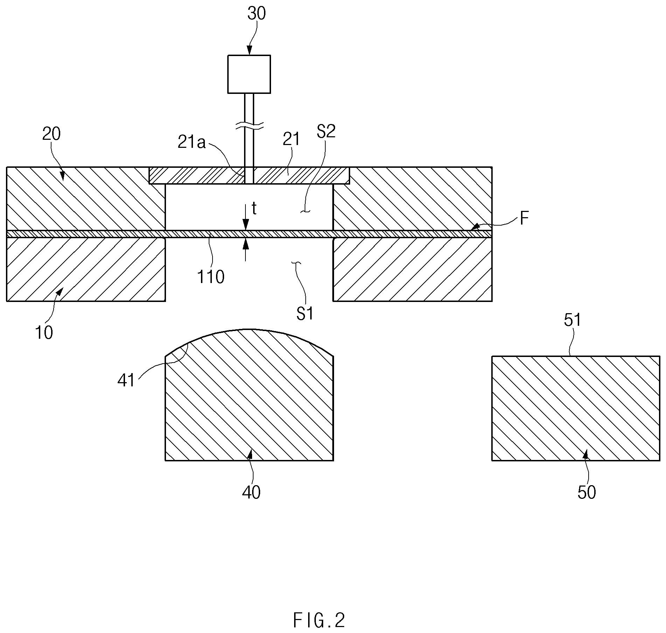

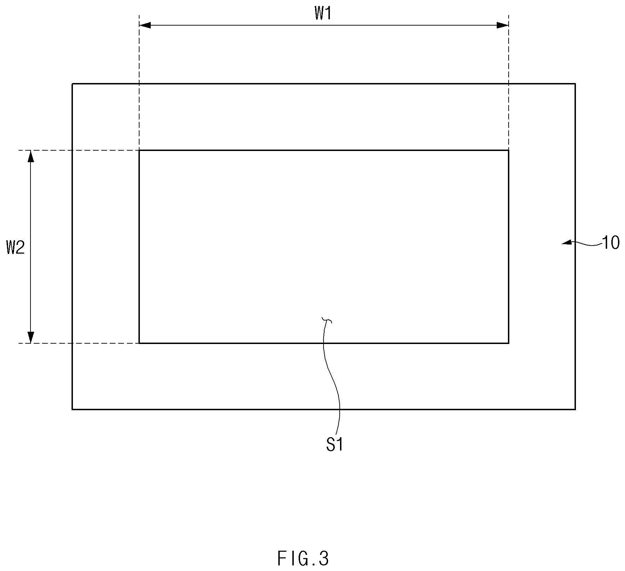

FIG. 2 is a schematic view of a molding apparatus according to an embodiment of the present invention, and FIG. 3 is a bottom view of a die according to an embodiment of the present invention.

A molding apparatus according to an embodiment of the present invention includes a die 10 on which a pouch film F is seated on a top surface thereof, and a stripper 20 disposed above the die 10 to fix the pouch film F, and a pressing part 30 applying a pneumatic or hydraulic pressure to the pouch film F. The molding apparatus may further include a first punch 40 and a second punch 50, which are inserted into a first space S1.

The pouch film F may have a predetermined thickness t. The pouch film F may be a laminate sheet in which a pair of resin layers disposed at both the outermost surfaces and a metal layer disposed between the pair of resin layers are laminated.

The pouch film F may be seated on the top surface of the die 10. The first space S1 recessed downward from the top surface may be defined in the die 10. The first space S1 may be opened to upper and lower sides. When the pouch film F is seated on the top surface of the die 10, the pouch film F may cover the first space S1 from the upper side. In addition, the first punch 40 and the second punch 50 to be described later may be inserted into the first space S1 from the lower side of the die 10.

A cross-section of the first space S1 of the die 10 may have a substantially rectangular shape. In more detail, the first space S1 may have a first width W1 in a first direction and a second width W2 in a second direction orthogonal to the first direction. That is, the first direction may be parallel to a horizontal direction of the first space S1, and the second direction may be parallel to a vertical direction of the first space S1. In addition, the first width W1 may be a horizontal width of the first space S1, and the second width W2 may be a vertical width of the first space S1.

The stripper 20 may face the die 10 with the pouch film F interposed therebetween. The stripper 20 may be configured to be elevated with respect to the die 10. The pouch film F may be inserted between the die 10 and the stripper 20 in a state in which the stripper 20 ascends, and then, when the stripper 20 descends, the pouch film F may be fixed between the die 10 and the stripper 20.

A second space S2 may be defined in the stripper 20. The second space S2 may be defined at a position corresponding to the first space S1 of the die 10.

In this embodiment, the second space S2 may be closed to the upper side and opened to the lower side. In more detail, the stripper 20 may be provided with a cover part 21 that sealing the second space S2 from the upper side. The cover part 21 may be coupled to the stripper 20 as a configuration separate from the stripper 20 or may be provided to be integrated with the stripper 20.

A passage 21a may be defined in the cover part 21 to allow the pressing part 30 to be described later to communicate with the second space S2. However, the present invention is not limited thereto, and the passage 21a may be provided in the stripper 20.

When the stripper 20 fixes the pouch film F, the pouch film F may cover the second space S1 from the lower side. That is, in the state in which the pouch film F is fixed between the die 10 and the stripper 20, a portion of the pouch film F may be disposed between the first space S1 and the second space S2. Hereinafter, the portion of the pouch film F disposed between the first space S1 and the second space S2 is referred to as a target area 110.

The pressing part 30 may apply the pneumatic or hydraulic pressure to the pouch film F, more specifically, to the target area 110 through the second space S2. As a result, the target area 110 may be elongated into the first space S1, and the target area 110 may be molded into the cup part. Thus, the cup part is indicated by the same reference numeral '110' as the target area 110.

Since the target area 110 of the pouch film F is elongated into the first space S1 and molded into the cup part 110, the horizontal length of the cup part 110 may be the same as or similar to the first width W1 of the first space S1, and the vertical length of the cup part 110 may be the same as or similar to the second width W2 of the first space S1.

The configuration of the pressing part 30 is not limited. In this embodiment, the pressing part 30 may apply the pneumatic pressure to the target area 110. For example, the pressing part 30 may include a pneumatic pump.

In more detail, the pressing part 30 may control an internal pressure of the second space S2 by introducing a gas into and out of the second space S2 through the passage 21a. Thus, when the internal pressure of the second space S2 is higher than the internal pressure (e.g., atmospheric pressure) of the first space S1, the target area 110 may be elongated into the first space S1 by a pressure difference between the first space S1 and the second space S2.

That is, since an isostatic pressure is applied to the target area 110, a thickness t of the target area 110 may be uniformly reduced as a whole in the process of elongating the target area 110. Thus, the concentration of the stress to a local area on the target area 110 may be minimized.

The first punch 40 and the second punch 50 may be inserted into the first space S1 from the lower side of the die 10. In more detail, the first punch 40 and the second punch 50 may be alternatively inserted into the first space S1.

For example, the first punch 40 and the second punch 50 may move horizontally with respect to the die 10, and the die 10 may move vertically with respect to the first punch 40 and the second punch 50. In this case, when the die 10 descends in a state in which the first punch 40 is aligned to be disposed at the lower side of the first space S1, the first punch 40 may be inserted into the first space S1. In addition, when the die 10 descends in a state in which the second punch 50 is aligned to be disposed at the lower side of the first space S1, the second punch 50 may be inserted into the first space S1.

However, the present invention is not limited thereto, and the die 10 may move horizontally with respect to the first punch 40 and the second punch 50, or the first punch 40 and the second punch 50 may be elevated with respect to the die 10.

An outer circumference of each of the punches 40 and 50 may be in contact with or adjacent to the inner circumference of the first space S1 of the die 10. This is because the pouch film F is not inserted between the outer circumference of each of the punches 40 and 50 and the inner circumference of the first space S1.

The first punch 40 may have a curved surface 41 that is convexly defined toward the pouch film F, more specifically, the target area 110. That is, the curved surface 41 may define a top surface of the first punch 40. The curved surface 41 may have the highest central portion and has a height that gradually decreases toward the inner circumference of the first space S1. In more detail, the curved surface 41 may have a shape corresponding to a portion of an ellipsoid.

In the state in which the first punch 40 is inserted into the first space S1, the target area 110 may be pressed by the pressing part 30 so as to be in close contact with the curved surface 41 of the first punch 40.

The second punch 50 may be inserted into the first space S1 after the first punch 40 is separated from the first space S1.

The second punch 50 may have a plane 51 facing the pouch film F, more specifically, the target area 110. That is, the plane 51 may define a top surface of the second punch 50.

In the state in which the second punch 50 is inserted into the first space S1 of the die 10, the target area 110 may be pressed by the pressing part 30 so as to be in close contact with the plane 51 of the second punch 50.

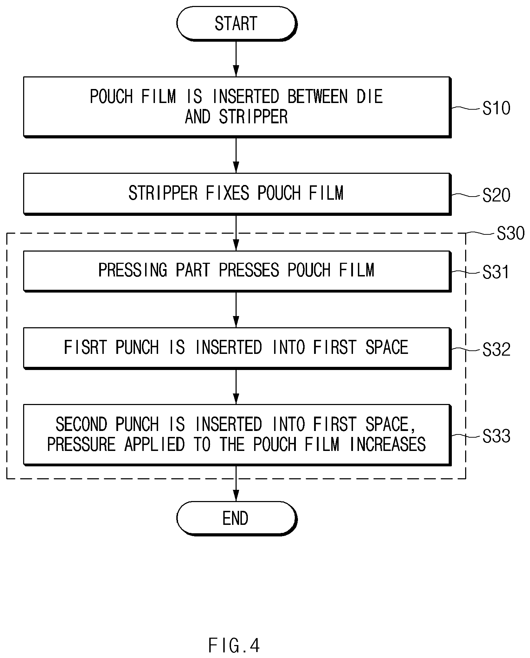

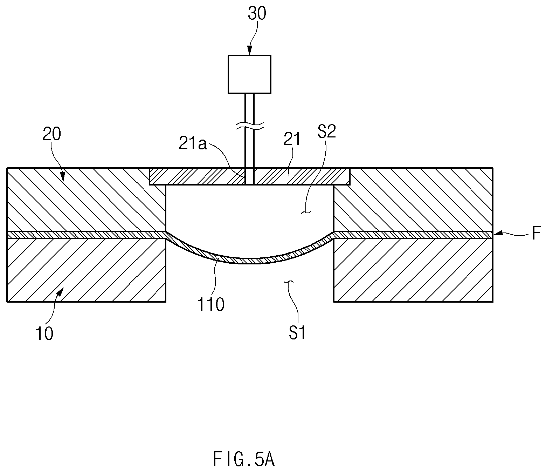

FIG. 4 is a flowchart illustrating a molding method performed using the molding apparatus according to an embodiment of the present invention, and FIGS. 5a to 5c are views for explaining an operation of the molding apparatus according to an embodiment of the present invention.

A molding method according to this embodiment may include a preparation process (S10) in which a pouch film F is inserted between a die 10 and a stripper 20, a fixing process (S20) in which the stripper 20 fixes the pouch film F, and a pressing process (S30) of applying a pneumatic or hydraulic pressure to the pouch film F.

In the preparation process (S10), the stripper 20 may ascend by a predetermined height with respect to the die 10, and the pouch film F may be inserted between the die 10 and the stripper 20. Thus, the pouch film F may be seated on a top surface of the die 10.

During the fixing process (S20), the stripper 20 may descend toward the die 10, and the pouch film F may be fixed between the die 10 and the stripper 20. Here, the target area 110 of the pouch film F may be disposed between the first space S1 of the die 10 and the second space S2 of the stripper 20.

During the pressing process (S30), the pressing part 30 may apply the pneumatic or hydraulic pressure to the pouch film F through the second space S2 of the stripper 20.

In this embodiment, the pressing part 30 may apply the pneumatic pressure to the target area 110. The pressing part 30 may allow the second space S2 to increase in internal pressure through the passage 21a, thereby applying an isotropic pressure to the pouch film F, more specifically, to the target area 110. Thus, the target area 110 may be elongated into the first space S1 and then be molded into the cup part 110.

In more detail, the pressing process (S30) may include a preliminary molding process (S31), a primary molding process (S32), and a secondary molding process (S33).

Referring to FIG. 5a, during the preliminary molding process (S31), the pressing part 30 may press the target area 110 in a state in which the first space S1 is opened. Here, the pressure applied to the target area 110 by the pressing part 30 may be appropriately adjusted so that a remaining thickness of the target area 110 is not excessively thin.

In more detail, the remaining thickness of the elongated target area 110 in the preliminary molding process S31 may be about 90% of the thickness t of the pouch film F. That is, the thickness of the target area 110 may decrease by approximately 10%, and the area of the target area 110 may increase by approximately 10%.

As described above, since the isotropic pressure is applied to the target area 110, the target area 110 may be uniformly elongated into the first space S1 to form a predetermined curved surface. The curved surface of the target area 110 may be formed to have the lowest central portion and have a height that gradually increases toward the inner circumference of the first space S1.

In more detail, the curved surface formed by the target area 110 may form a portion of an ellipsoid defined by Equation 1 below.

[Equation 1]

$$\left(\frac{x}{a}\right)^2+\left(\frac{y}{b}\right)^2+\left(\frac{z}{c1}\right)^2=1$$

In Equation 1, x is a coordinate in a first direction parallel to the horizontal direction of the first space S1, y is a coordinate in a second direction parallel to the vertical direction of the first space S1, and z is coordinates in the vertical direction. In addition, a is a half of a first width W1, b is a half of a second width W2, and c1 is a depth of the curved surface formed by the target area 110.

The c1 may be proportional to an average value of the values a and b. For example, when the thickness of the target area 110 is elongated to decrease by about 10%, the c1 may be approximately 0.4 times the average value of the values a and b. Thus, those skilled in the art will readily understand that the c1 easily increases as a ratio of the values a and b approaches 1 if a value obtained by multiplying the values a and b is constant, and the remaining thickness of the target area 110 is constant.

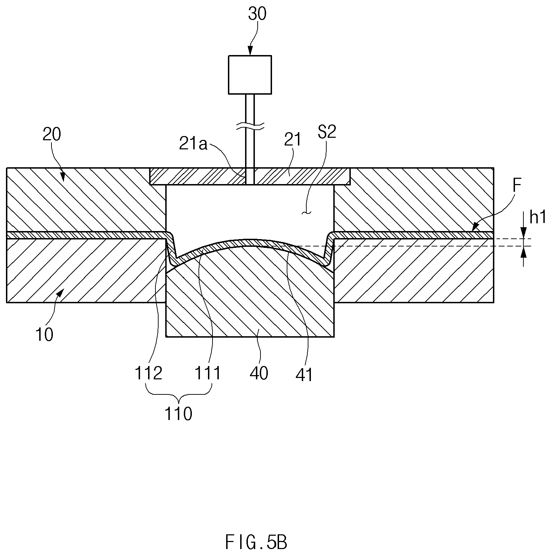

Referring to FIG. 5b, during the primary molding process (S32), the first punch 40 may be inserted into the first space S1 of the die 10. Here, the pressing part 30 may continuously maintain the pressure applied to the target area 110.

In the state in which the first punch 40 is inserted into the first space S1, the central portion of the curved surface 41 of the first punch 40 may be disposed at a height lower than the top surface of the die 10. In more detail, the first punch 40 may be inserted into the first space S1 at a height that does not interfere with the elongated target area 110 in the preliminary molding process S31.

The curved surface 41 of the first punch 40 may have an approximately symmetrical shape with respect to the curved surface formed by the elongated target area 110 in the preliminary molding process (S31). That is, the curved surface 41 of the first punch 40 may form a portion of an ellipsoid defined by Equation 2 below.

[Equation 2]

$$\left(\frac{x}{a}\right)^2+\left(\frac{y}{b}\right)^2+\left(\frac{z}{c2}\right)^2=1$$

In Equation 2, x is a coordinate in a first direction parallel to the horizontal direction of the first space S1, y is a coordinate in a second direction parallel to the vertical direction of the first space S1, and z is coordinates in the vertical direction. In addition, a is a half of the first width W1, b is a half of the second width W2, and c2 is a value obtained by multiplying the average value of the values a and b by a predetermined correction constant k.

As described in Equation 1 above, when the thickness of the target area 110 is elongated to decrease by about 10% in the preliminary molding process (S31), c1 may be approximately 0.4 times the average value of a and b.

Thus, the correction constant k may be determined within a predetermined range with a median value of 0.4 so that the c2 corresponds to the c1. In more detail, the correction constant k may be 0.2 to 0.6, and may be appropriately determined according to a depth of the cup part 110 to be molded.

Due to the shape of the curved surface 41 of the first punch 40, a portion of the target area 110 may be in close contact with the curved surface 41 during the primary molding process (S32), and the other portion of the target area 110 may be in contact with or adjacent to the inner circumference of first space S1. Hereinafter, the portion of the target area 110 will be referred to as a first area 111, and the other portion of the target area 110 will be referred to as a second area 112.

Thereafter, the first area 111 may be molded as a bottom surface of the cup part 110, and the second area 112 may be molded as the circumferential surface of the cup part 110. Thus, the bottom surface of the cup part 110 is denoted by the same reference numeral '111' as that of the first area 111, and the circumferential surface of the cup part 110 is denoted by the same reference numeral '112' as the second area 112.

Since the first area and the second area 112 are formed to be previously divided into each other in the primary molding process (S32), the second area 112 may be easily elongated in the subsequent secondary molding process (S33). Thus, there is an advantage that the cup part 110 is deeply molded without wrinkles due to buckling on the circumferential surface 112 of the cup part 110.

In addition, since a portion at which the first area 111 and the second area 112 meet each other forms an acute angle, in the subsequent secondary molding process (S33), the second area 112 may be in easily close contact with the inner circumference of the first space S1. Thus, the circumferential surface 112 of the cup part 110 may be formed to be perpendicular to the bottom surface 111, and a curvature radius of each of an edge and corner of the cup part 110 may be minimized to prevent stress from being concentrated to the corner of the cup part 110.

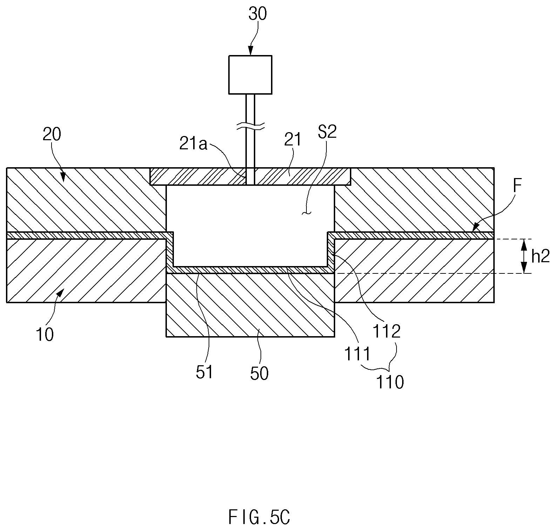

Referring to FIG. 5c, the second punch 50 may be inserted into the first space S1 of the die 10 during the secondary molding process S33. In more detail, when the primary molding process (S32) is completed, the first punch 40 may be separated from the first space S1 of the die 10, and the second punch 50 may be inserted into the first space S1 of the die 10 so that the secondary molding process (S33) is performed.

In the state in which the second punch 50 is inserted into the first space S1, a plane 51 of the second punch 50 may be disposed at a height lower than the top surface of the die 10.

In more detail, the second punch 50 may be inserted into the first space S1 at a height lower than that of the first punch 40 during the primary molding process (S32). That is, a height difference h2 between the plane 51 and the top surface of the die 10 when the second punch 50 is inserted into the first space S1 may be greater than a height difference h1 between the curved surface 41 and the top surface of the die 10 when the first punch 40 is inserted into the first space S1.

In addition, the pressure applied to the pouch film F, more specifically, the target area 110 in the secondary molding process (S33) may be higher than that in the primary molding process (S32). That is, the pressing part 30 may apply a higher pressure in a state in which the second punch 50 is inserted when compared to a state in which the first punch 40 is inserted into the first space S1.

Thus, during the secondary molding process (S33), the first area 111 may be in close contact with the plane 51 of the second punch 50, and the second area 112 may be in close contact with the inner circumference of the first space S1. Thus, the molding of the cup part 110 may be completed.

In more detail, the first area 111 may be horizontally formed as the bottom surface 111 of the cup part 110, and the second area 112 may be vertically formed as the circumferential surface 112 of the cup part 110. In addition, during the secondary molding process (S33), since the second area 112 is elongated downward, the depth of the cup part 110 may be sufficiently deep.

The primary molding process (S32) may be directly performed without the pressing process (S30) including the preliminary molding process (S31). In this case, the pressing part 30 may start the pressing on the target area 110 in the state in which the first punch 40 is inserted into the first space S1 of the die 10.

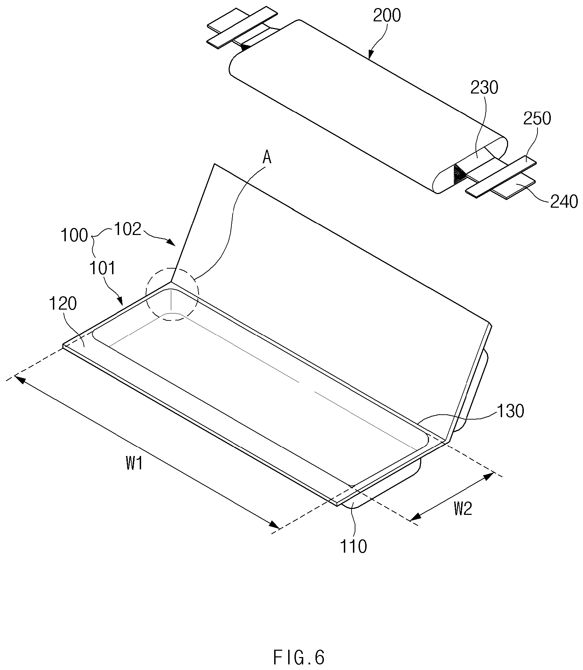

FIG. 6 is an exploded perspective view illustrating the secondary battery according to an embodiment of the present invention.

The secondary battery 1 according to the present invention may include a pouch-type battery case 100 (hereinafter, referred to as a 'battery case') and an electrode assembly 200 accommodated in the battery case 100.

The battery case 100 may be molded by the molding apparatus and molding method described above. The battery case 100 may include a cup part 110 having a recessed shape and a terrace 120 disposed at least a portion of a circumference of the cup part 110. The terrace 120 may be a portion of the pouch film F in which the cup part 110 is not formed.

In more detail, the battery case 100 may be provided by sealing a pair of cases 101 and 102 connected to each other through a folding part 130. However, the present invention is not limited thereto, and the pair of cases 101 and 102 may be sealed in a state of being separated from each other to provide the battery case 100.

In addition, at least one of the pair of cases 101 and 102 may be provided with the cup part 110 having the recessed shape. The cup part 110 may be recessed by a predetermined depth from the terrace 120 to define a space in which the electrode assembly 200 is accommodated. Hereinafter, a case in which the pair of cases 101 and 102 includes a first case 101, in which the cup part 110 is provided, and a second case 102, in which the cup part 110 is not provided, will be described as an example.

The first case 101 may include the terrace 120 disposed at least a portion of the circumference of the cup part 110. In more detail, the terrace 120 may be connected to an upper end of the circumferential surface 112 of the cup part 110.

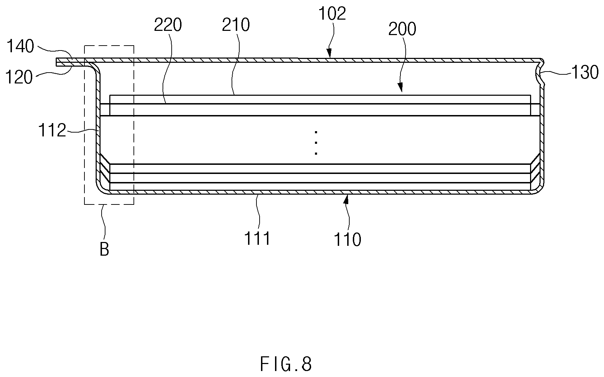

In the state in which the electrode assembly 200 is accommodated in the cup part 110, the folding part 130 may be folded so that the second case 102 covers the cup part 110. In addition, the secondary battery 1 may be provided by fusing edge portions of the terrace 120 and the second case 102 to provide the sealing portion 140 (see FIG. 8), thereby manufacturing the secondary battery 1.

The electrode assembly 200 may include a plurality of electrodes 210 (see FIG. 8) and a plurality of separators 220 that are alternately stacked. The plurality of electrodes 210 are alternately stacked with the separator 220 interposed therebetween and may include a positive electrode and a negative electrode, which have opposite polarities.

In addition, the electrode assembly 200 may include a plurality of electrode tabs 230 welded to each other. The plurality of electrode tabs 230 may be connected to the plurality of electrodes 210 and protrude from the electrode assembly 200 to the outside to serve as a passage through which electrons move between the inside and the outside of the electrode assembly 200. The plurality of electrode tabs 230 may be disposed inside the battery case 100.

The electrode tab 230 connected to the positive electrode and the electrode tab 230 connected to the negative electrode may protrude in different directions with respect to the electrode assembly 200. However, the present invention is not limited thereto, and the electrode tab 230 connected to the positive electrode and the electrode tab 230 connected to the negative electrode may protrude in the same direction in parallel with each other.

A lead 240 supplying electricity to the outside of the secondary battery may be connected to the plurality of electrode tabs 230 by spot welding or the like. The lead 240 may have one end connected to the plurality of electrode tabs 230 and the other end protruding to the outside of the battery case 100.

A portion of the lead 240 may be surrounded by an insulating part 250. For example, the insulating part 250 may include an insulating tape. The insulating part 250 may be disposed between the terrace 120 and the second case 102 of the first case 101, and in this state, the terrace 120 and the second case 102 may be thermally fused to each other. In this case, a portion of each of the terrace 120 and the second case 102 may be thermally fused to the insulating part 250. Thus, the insulating part 250 may prevent the electricity generated from the electrode assembly 200 from flowing to the battery case 100 through the lead 240 and may maintain sealing of the battery case 100.

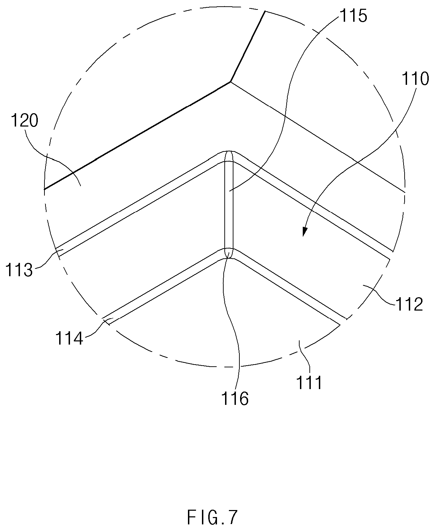

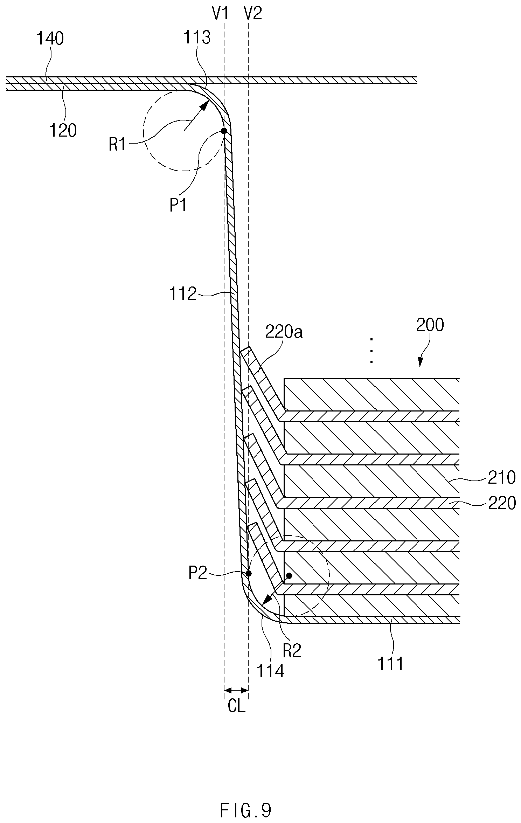

FIG. 7 is an enlarged view of a portion 'A' of FIG. 6, FIG. 8 is a cross-sectional view illustrating the inside of the secondary battery according to an embodiment of the present invention, and FIG. 9 is an enlarged view of a portion 'B' of FIG. 8.

Hereinafter, the configuration of the cup part 110 of the battery case 100 will be described in detail.

The cup part 110 may include a bottom surface 111 and a circumferential surface 112. The circumferential surface 112 may connect the bottom surface 111 to the terrace 120. The circumferential surface 112 may be provided in plurality, in more detail, in four.

The bottom surface 111 may cover one surface of the electrode assembly 200, and the circumferential surface 112 may surround the electrode assembly 200.

In addition, the cup part 110 may include a first edge 113 on which the circumferential surface 112 and the terrace 120 meet each other, a second edge 114 on which the bottom surface 111 and the circumferential surface 112 meet each other, and a third edge 115 on which a pair of circumferential surfaces, which are adjacent to each other, among the plurality of circumferential surfaces 112 meet each other. Each of the edges 113, 114, 115 may be rounded to have a predetermined curvature radius.

In addition, the cup part 110 may include a corner 116 on which a pair of adjacent circumferential surfaces 112 of the plurality of circumferential surfaces 112 and a bottom surface 111 meet each other. That is, the corner 116 may be a portion at which a pair of second edge 114 and third edge 115, which are adjacent to each other, overlap each other. The corner 116 may have a predetermined curvature radius.

Since the cup part 110 has four circumferential surfaces 112, each of the edges 113, 114, and 115 and the corner 116 may be provided in four.

In the molding apparatus and molding method according to an embodiment of the present invention, concentration of stress to each of the edge 113, 114, 115 and the corner 116 of the cup part 110 may be minimized. Thus, the curvature radius of each of the edges 113, 114, 115 and the corner 116 may be sufficiently small, and simultaneously, a remaining thickness of the corner 116 may be sufficiently thick.

In more detail, at least a portion of the plurality of edges 113, 114, and 115 may have a curvature radius of 0.1 mm or more and less than 0.5 mm. A curvature radius R1 of the first edge 113 may be a curvature radius with respect to an outer surface of the first edge 113. A curvature radius R2 of the second edge 114 may be a curvature radius with respect to an inner surface of the second edge 114.

In addition, the corner 116 may have a curvature radius in a range of 0.75 mm to 1.25 mm. The curvature radius of the corner 116 may be a curvature radius with respect to an inner surface of the corner 116.

On the other hand, since the cup part according to the related art is molded by the direct pressing of the punch, the elongation may be concentrated on each of the edge and corner of the cup part, and thus, each of the edges may have a curvature radius of 0.5 mm to 1 mm, and the corner may have a curvature radius of 1.5 mm to 3 mm to prevent cracks and like from occurring in each of the edge and the corner. This is a fact well known to those skilled in the art. Therefore, it is seen that the curvature radius of each of the edge 113, 114, 115 and the corner 116 of the cup part 110 according to an embodiment of the present invention is less compared to the cup part according to the related art.

Since the curvature radius of each of the edges 113, 114, 115 and the corner 116 is sufficiently small, an outer appearance of the cup part 110 may be sharply provided. Also, even if the electrode 210 of the electrode assembly 200 is disposed to be very adjacent to the circumferential surface 112 of the cup part 110, an interference between the electrode 210 and the cup part 110 may be prevented from occurring.

That is, since the electrode 210 of the electrode assembly 200 is disposed to be very adjacent to the circumferential surface 112 of the cup part 110, an empty space in the cup part 110 may be reduced, and energy density of the secondary battery may increase to prevent the electrode assembly 200 from moving inside the cup part 110. In this case, the edge portion 220a of the separator 220 protruding further outward than the electrode 210 may be folded to be internal contact with the circumferential surface 112 of the cup part 110. The edge portion 220a of the separator 220 may be randomly folded or folded in a predetermined direction. For example, the edge portion 220a of the separator 220 may be folded toward an opposite direction of the bottom surface 111.

In addition, a thickness of the corner 16 may be 0.75 times to 0.85 times a thickness of the bottom surface 111. That is, the thickness of the corner 16 may be less 15% to 25% than the thickness of the bottom surface 111. In this case, the thickness of the bottom surface 111 may be a thickness measured at a center of the bottom surface 111, and the thickness of the corner 16 may be a thickness measured at a center of the corner 16.

On the other hand, since the cup part according to the related art is molded by the direct pressing of the punch, the elongation may be concentrated at the corner of the cup part, and thus the thickness of the corner of the cup part may be less 30% to 40% than the thickness of the bottom surface of the cup part. This is a fact well known to those skilled in the art. Therefore, when compared to the cup part according to the related art, it is confirmed that the remaining thickness of the corner 116 of the cup part 110 according to the embodiment of the present invention is thick.

Since the remaining thickness of the corner 116 is sufficiently thick, cracks or pin-holes may not occur in the corner 116. In addition, the cup part 110 may be provided to be deeper.

In the molding apparatus and the molding method according to an embodiment of the present invention, the circumferential surface 112 of the cup part 110 may be disposed close to perpendicular to the bottom surface 111. In more detail, an angle defined by the circumferential surface 112 of the cup part 110 with respect to the bottom surface 111 or the terrace 120 of the cup part 110 may be 90 degrees to 95 degrees.

Thus, a clearance CL between the first edge 113 and the second edge 114 may be minimized. In this case, the clearance CL may mean a distance between a virtual first vertical line V1 that vertically passes through a boundary point P1 between the first edge 113 and the circumferential surface 112 and a virtual second vertical line V2 that vertically passes through a boundary point P2 between the second edge 114 and the circumferential surface 112.

In more detail, the clearance CL between the first edge 113 and the second edge 114 may be 0.1 mm or less. When the circumferential surface 112 of the cup part 110 is completely vertical, the clearance CL may be zero.

In addition, the clearance CL between the first edge 113 and the second edge 114 may be less than or equal to each of the curvature radius R1 of the first edge 113 and the curvature radius R2 of the second edge 114.

Thus, since the empty space in the cup part 110 is further reduced, the energy density of the secondary battery may be improved, and the outer appearance of the secondary battery may be further improved.

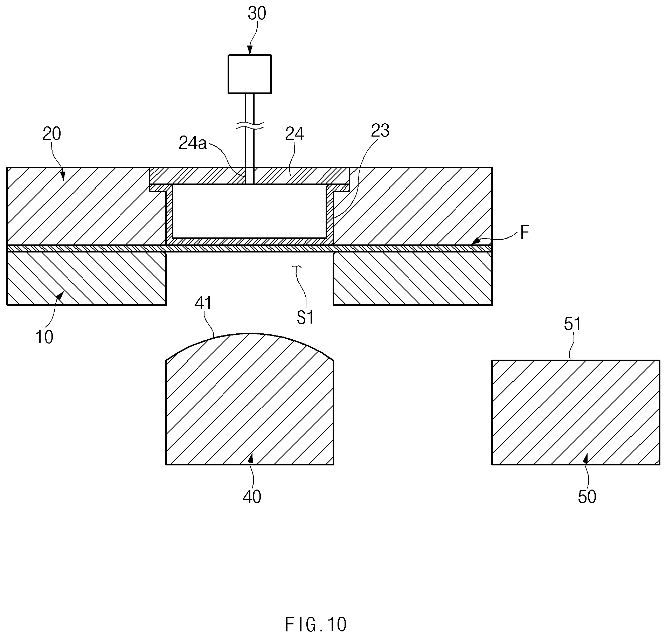

FIG. 10 is a schematic view of a molding apparatus according to another embodiment of the present invention.

Hereinafter, the same content as that of the molding apparatus according to the embodiment described above will be referred to and described with a focus on the differences.

A molding apparatus according to this embodiment may further include a flexible bag 23 and a bag body 24.

The flexible bag 23 may be disposed in a second space S2 (see FIG. 2) of a stripper 20. The flexible bag 23 may be in contact with a pouch film F, more specifically, a target area 110. The flexible bag 23 may expand by a pressing part 30 to apply a pressure to the target area 110, and the target area 110 may be elongated into a first space S1.

The bag body 24 may be connected to the flexible bag 23. The bag body 24 may seal an inner space of the flexible bag 23. That is, the inner space of the flexible bag 23 may be defined by the flexible bag 23 and the bag body 24.

In addition, the bag body 24 may seal the second space S2 of the stripper 20. In more detail, the second space S2 of the stripper 20 according to this embodiment may be opened to an upper side. In addition, the bag body 24 may cover the second space S2 from the upper side in the state in which the flexible bag 23 is inserted into the second space S2. That is, the bag body 24 may serve as the cover part 21 (see FIG. 2) described in the foregoing embodiment.

In addition, in the bag body 24, a passage 24a through which a pressing part 30 and an inner space of the flexible bag 23 communicate with each other may be provided.

The pressing part 30 according to this embodiment may control an internal pressure of the flexible bag 23 by introducing a fluid through the passage 24a. The term "fluid" encompasses a liquid and a gas. That is, the pressing part 30 may apply a pneumatic or hydraulic pressure to the target area 110. For example, the pressing part 30 may include a pneumatic pump or a hydraulic pump.

Thus, when the internal pressure of the flexible bag 23 is higher than the internal pressure (e.g., atmospheric pressure) of the first space S1, the target area 110 may be elongated into the first space S1 by a pressure difference between the first space S1 and the flexible bag 23.

That is, since an isostatic pressure is applied to the target area 110, a thickness t of the target area 110 may be uniformly reduced as a whole in the process of elongating the target area 110. Thus, the concentration of the stress to a local area on the target area 110 may be minimized.

Particularly, when the pressing part 30 applies the hydraulic pressure to a pouch film F using a liquid, the liquid may not be in contact with the stripper 20 and the pouch film F by the flexible bag 23. As a result, possibility that the molding apparatus is broken or malfunctioned due to the liquid may be removed.

Those skilled in the art may easily understand that the molding method according to the above-described embodiment is carried out even by the molding apparatus according to another embodiment of the present invention, and the cup part 110 of the battery case 100 may be molded.

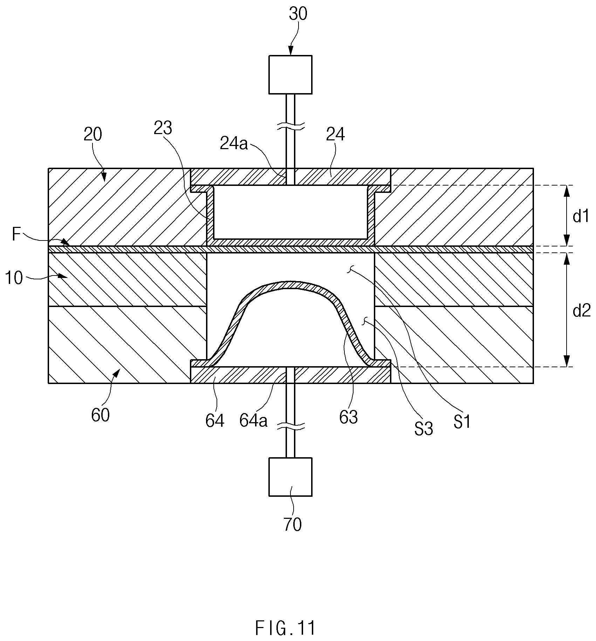

FIG. 11 is a schematic view of a molding apparatus according to further another embodiment of the present invention.

A molding apparatus according to another embodiment of the present invention does not include a first punch 40 and a second punch 50, but uses a pneumatic or hydraulic pressure at both sides of a pouch film F to mold a cup part 110.

Hereinafter, a case in which a pressing part 30 applies the hydraulic pressure to a pouch film F as in the other embodiments described above will be described as an example. In addition, for convenience of description, a flexible bag 23 is referred to as a 'first flexible bag', and a bag body 24 is referred to as a 'first bag body'. However, the present invention is not limited thereto, and it is of course also possible for the pressing part 30 to apply the pneumatic pressure to the pouch film F as in the above-described exemplary embodiment.

The molding apparatus according to another embodiment of the present invention may further include a lower body 60, a second flexible bag 63, a second bag body 34, and a sub pressing part 70.

The lower body 60 may be disposed below a die 10. A third space S3 communicating with a first space S1 of the die 10 may be defined in the lower body 60. The lower body 60 may be manufactured to be separated from the die 10. However, the present invention is not limited thereto, and the lower body 60 and the die 10 may be integrated with each other.

The second flexible bag 63 may be disposed in a third space S3 and be expanded into the first space S1 so as to be in contact with the pouch film F.

The second bag body 64 may be connected to the second flexible bag 63. The second bag body 64 may seal an inner space of the second flexible bag 63. That is, the inner space of the second flexible bag 63 may be defined by the second flexible bag 63 and the second bag body 64.

In addition, the second bag body 64 may seal the third space S3 of the lower body 60. In more detail, the third space S3 may be opened to a lower side, and the second bag body 64 may cover the third space S2 from a lower side in a state of being inserted into the third space S3. In addition, in the second bag body 64, a passage 64a through which the sub pressing part 70 and the inner space of the second flexible bag 63 communicate with each other may be provided.

The sub pressing part 70 may control an internal pressure of the second flexible bag 63 by introducing a fluid through the passage 64a. The term "fluid" encompasses a liquid and a gas. That is, the sub pressing part 70 may apply the pneumatic or hydraulic pressure to a target area 110. For example, the sub pressing part 70 may include a pneumatic pump or a hydraulic pump.

A distance d1 between the pouch film F and the first bag body 24 may be less than a distance d2 between the pouch film F and the second bag body 64. Thus, the first flexible bag 23 may uniformly press the target area 110 as a whole, while the second flexible bag 63 may press only a portion of the target area 110 according to a degree of expansion, or the target area 110 may be pressed as a whole. This will be described in detail later.

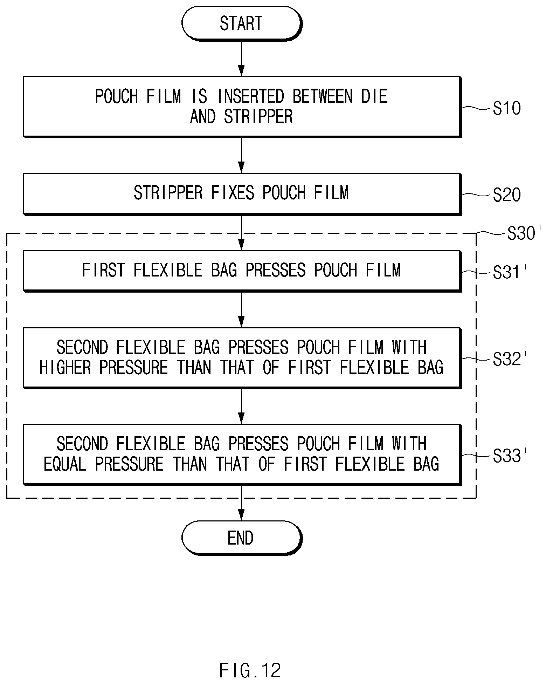

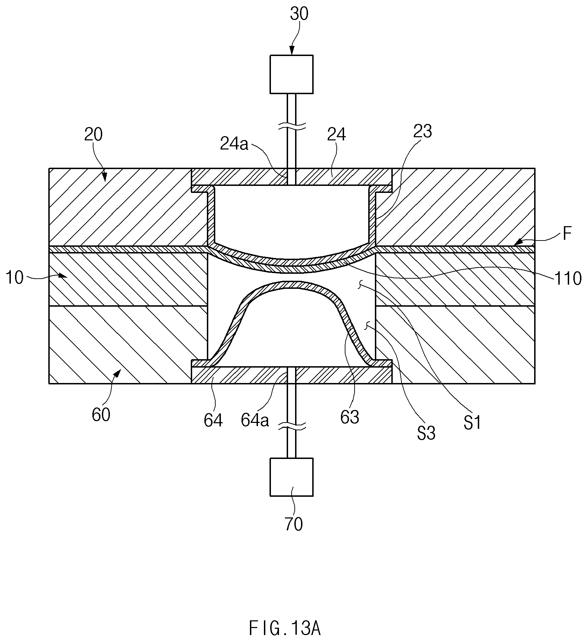

FIG. 12 is a flowchart illustrating a molding method performed using the molding apparatus according to further another embodiment of the present invention, and FIGS. 13a to 13c are views for explaining an operation of the molding apparatus according to further another embodiment of the present invention.

A molding method according to this embodiment may include a preparation process (S10) in which a pouch film F is inserted between a die 10 and a stripper 20, a fixing process (S20) in which the stripper 20 fixes the pouch film F, and a pressing process (S30') of applying a pneumatic or hydraulic pressure to the pouch film F.

The preparation process (S10) and the fixing process (S20) refer to the contents described above.

In the pressing process (S30'), a pressing part 30 may adjust an internal pressure of a first flexible bag 23, and a sub pressing part 70 may adjust an internal pressure of a second flexible bag 63 to apply a pneumatic or hydraulic pressure to a pouch film F. Thus, an isotropic pressure may act on the pouch film F, more specifically, a target area 110, and the target area 110 may be elongated into a first space S1 so as to be molded into a cup part 110.

In more detail, the pressing process (S30') may include a preliminary molding process (S31'), a secondary molding process (S32'), and a secondary molding process (S33').

Referring to FIG. 13a, in the preliminary molding process (S31'), the first flexible bag 23 may press the pouch film F, more specifically, the target area 110. Here, the pressure applied to the target area 110 may be appropriately adjusted so that a remaining thickness of the target area 110 is not excessively thin.

In more detail, the first flexible bag 23 may be expanded by the pressing part 30 to apply the isotropic pressure to the target area 110. Thus, the target area 110 may be uniformly elongated into the first space S1 to form a predetermined curved surface. The curved surface of the target area 110 may be formed to have the lowest central portion and have a height that gradually increases toward the inner circumference of the first space S1.

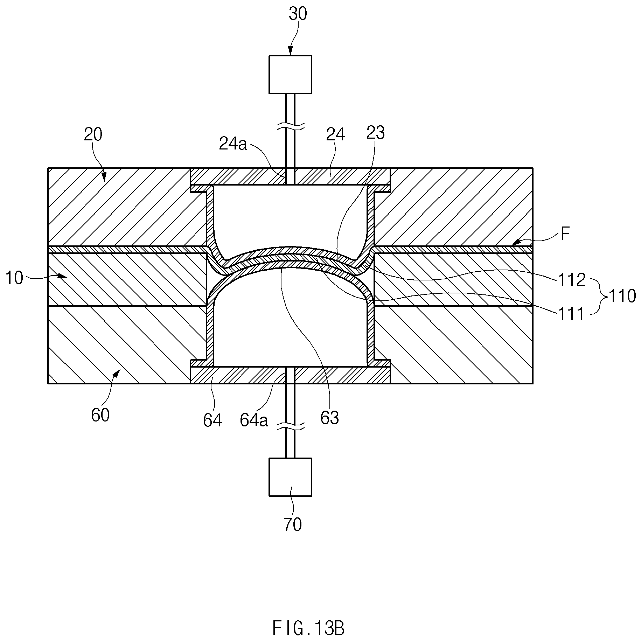

Referring to FIG. 13b, in the primary molding process (S32'), the second flexible bag 63 may be expanded into the first space S1 to press the pouch film F, more specifically, the target area 110. Here, the first flexible bag 23 may continuously maintain the pressure applied to the target area 110.

Since the second bag body 64 is disposed farther than the first bag body 63 with respect to the pouch film F, the second flexible bag 63 may be in contact with a portion of a central portion of the target area 110 in the primary molding process S32'. Here, the internal pressure of the second flexible bag 63 may be higher than the internal pressure of the first flexible bag 23.

Thus, a portion of the target area 110 may be formed convex upward while being pressed between the first flexible bag 23 and the second flexible bag 63, and the other portion of the target area 110 may be spaced apart from the second flexible bag 63 and be in contact with or adjacent to an inner circumference of the first space S1. Hereinafter, the portion of the target area 110 will be referred to as a first area 111, and the other portion of the target area 110 will be referred to as a second area 112.

Since the first area and the second area 112 are formed to be previously divided into each other in the primary molding process (S32'), the second area 112 may be easily elongated in the subsequent secondary molding process (S33'). Thus, there is an advantage that the cup part 110 is deeply molded without wrinkles due to buckling on the circumferential surface 112 of the cup part 110.

In addition, since a portion at which the first area 111 and the second area 112 meet each other forms an acute angle, in the subsequent secondary molding process (S33'), the second area 112 may be in easily close contact with the inner circumference of the first space S1. Thus, the circumferential surface 112 of the cup part 110 may be formed to be perpendicular to the bottom surface 111, and a curvature radius of each of an edge and corner of the cup part 110 may be minimized to prevent stress from being concentrated to the corner of the cup part 110.

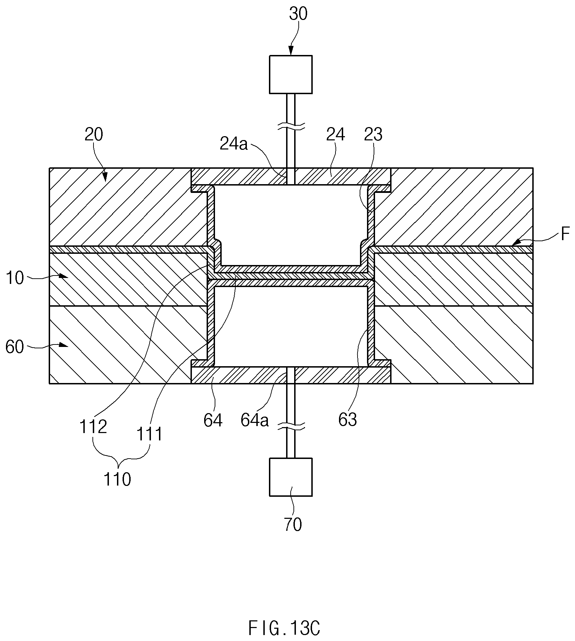

Referring to FIG. 13c, in the secondary molding process (S33'), the internal pressures of the first flexible bag 23 and the second flexible bag 63 may be adjusted to be equal to each other. In addition, the inner pressure of each of the first flexible bag 23 and the second flexible bag 63 may be greater than the inner pressure of the second flexible bag 63 in the primary molding process (S32').

Thus, the first area 111 may be flatly pressed between the first flexible bag 23 and the second flexible bag 63, and the second area 112 may be in close contact with the inner circumference of the first space S1. Thus, the molding of the cup part 110 may be completed.

In the case of this embodiment, there is an advantage that a separate punch is unnecessary, and the cup part 110 is molded without elevating and moving the die 10 and the stripper 20.

## Claims

1. A molding apparatus for molding a cup part (110) in a pouch film (F), the molding apparatus comprising:

   a die (10) on which the pouch film (F) is seated on a top surface thereof and in which a first space (S1) recessed from the top surface is defined;
   a stripper (20) which is disposed above the die to fix the pouch film and in which a second space (S2) is defined at a position corresponding to the first space; and
   a pressing part (30) configured to apply a pneumatic or hydraulic pressure to the pouch film through the second space so that a portion of the pouch film is elongated into the first space, the molding apparatus comprising:

      a first punch (40) configured to be inserted into the first space (S1) and having a curved surface (41) that is convex toward the pouch film (F), the apparatus being **characterized in** having
      a second punch (50) configured to be inserted into the first space (S1) and having a plane (51) facing the pouch film (F).

2. The molding apparatus of claim 1, wherein the stripper (20) is provided with a cover part (21) configured to seal the second space (S2) at an upper side,

   a passage (21a) through which the pressing part (30) and the second space communicate with each other is provided in the stripper or the cover part, and
   the pressing part (30) controls an internal pressure of the second space by introducing or discharging a gas through the passage.

3. The molding apparatus of claim 1, further comprising:

   a flexible bag (23) disposed in the second space (S2) so as to be in contact with the pouch film (F); and
   a bag body (24) which is configured to seal the second space, to which the flexible bag is connected, and in which a passage (24a) through which the pressing part (30) and the flexible bag communicate with each other is provided,
   wherein the pressing part controls an internal pressure of the flexible bag by introducing or discharging a fluid through the passage.

4. The molding apparatus of claim 1, wherein the curved surface (41) has the highest central portion and a height that gradually decreases toward an inner circumference of the first space (S1).

5. The molding apparatus of claim 4, wherein, in the state in which the first punch (40) is inserted into the first space (S1), the central portion of the curved surface (41) is disposed at a height lower than that of a top surface of the die (10).

6. The molding apparatus of claim 1, wherein the pressing part (30) applies a higher pressure in a state in which the second punch (50) is inserted into the first space (S1) when compared to a state in which the first punch (40) is inserted into the first space.

7. The molding apparatus of claim 1, wherein a height difference between the plane (51) and the top surface of the die (10) when the second punch (50) is inserted into the first space (S1) is greater than a height difference between the curved surface (41) and the top surface of the die when the first punch (40) is inserted into the first space.

8. The molding apparatus of claim 1, further comprising:

a lower body (60) which is disposed below the die (10) and in which a third space (S3) communicating with the first space (S1) is defined; a flexible bag (63) disposed in the third space and expanded into the first space (S1) so as to be in contact with the pouch film (F); a bag body (64) which is configured to seal the third space (S3) and to which the flexible bag is connected; and a sub pressing part (70) configured to control an internal pressure of the flexible bag by introducing or discharging a fluid through a passage (64a) provided in the bag body.

9. A molding method for molding a cup part (110) in a pouch film (F), the molding method comprising:

a preparation process (S10) in which the pouch film is inserted between a die (10) and a stripper (20); a fixing process (S20) in which the stripper (20) fixes the pouch film (F); and a pressing process (S30) in which a pressing part (30) applies a pneumatic or hydraulic pressure to the pouch film through a second space (S2) formed in the stripper so that a portion of the pouch film is elongated into a first space (S1) formed in the die, wherein the pressing process (S30) comprises:

a primary molding process (S32) in which a first punch (40) having a curved top surface (41) is inserted into the first space of the die, and a portion of the pouch film is in close contact with the curved surface, wherein the curved surface is convexly formed upward; the molding method being **characterized in** further comprising a secondary molding process (S33) in which a second punch (50) having a planar top surface (51) is inserted into the first space, and a portion of the pouch film is in close contact with the plane,

wherein a pressure applied to the pouch film in the secondary molding process is greater than that applied to the pouch film in the primary molding process.

## Patentansprüche

1. Formvorrichtung zum Formen eines Becherteils (110) in einer Beutelfolie (F), wobei die Formvorrichtung umfasst:

eine Matrize (10), auf welcher die Beutelfolie (F) auf einer oberen Fläche davon sitzt und in welcher ein erster Raum (S1) definiert ist, welcher von der oberen Fläche ausgespart ist; einen Abstreifer (20), welcher oberhalb der Matrize angeordnet ist, um die Beutelfolie zu fixieren, und in welchem an einer Position, welche dem ersten Raum entspricht, ein zweiter Raum (S2) definiert ist; und einen Pressteil (30), welcher dazu eingerichtet ist, durch den zweiten Raum einen pneumatischen oder hydraulischen Druck auf die Beutelfolie auszuüben, so dass ein Abschnitt der Beutelfolie in den ersten Raum verlängert wird, wobei die Formvorrichtung umfasst:

einen ersten Stempel (40), welcher dazu eingerichtet ist, in den ersten Raum (S1) eingesetzt zu sein, und welcher eine gekrümmte Fläche (41) aufweist, welche in Richtung der Beutelfolie (F) konvex ist, wobei die Vorrichtung **dadurch gekennzeichnet ist, dass** sie einen zweiten Stempel (50) aufweist, welcher dazu eingerichtet ist, in den ersten Raum (S1) eingesetzt zu sein, und welcher eine Ebene (51) aufweist, welche der Beutelfolie (F) zugewandt ist.

2. Formvorrichtung nach Anspruch 1, wobei der Abstreifer (20) mit einem Abdeckteil (21) bereitgestellt ist, welcher dazu eingerichtet ist, den zweiten Raum (S2) an einer oberen Seite abzudichten,

ein Durchgang (21a), durch welchen der Pressteil (30) und der zweite Raum miteinander in Verbindung stehen, in dem Abstreifer oder dem Abdeckteil bereitgestellt ist und der Pressteil (30) durch ein Einführen oder ein Ablassen eines Gases durch den Durchgang einen Innendruck des zweiten Raums steuert.

3. Formvorrichtung nach Anspruch 1, ferner umfassend:

eine flexible Tasche (23), welche derart in dem zweiten Raum (S2) angeordnet ist, dass sie in Kontakt mit der Beutelfolie (F) ist; und einen Taschenkörper (24), welcher dazu eingerichtet ist, den zweiten Raum abzudichten, mit welchem die flexible Tasche verbunden ist und in welchem ein Durchgang (24a) bereitgestellt ist, durch welchen der Pressteil (30) und die flexible Tasche miteinander in Verbindung stehen,

wobei der Pressteil durch ein Einführen oder ein Ablassen eines Fluids durch den Durchgang einen Innendruck der flexiblen Tasche steuert.

4. Formvorrichtung nach Anspruch 1, wobei die gekrümmte Fläche (41) den höchsten mittleren Abschnitt und eine Höhe aufweist, welche in Richtung eines inneren Umfangs des ersten Raums (S1) allmählich abnimmt.

5. Formvorrichtung nach Anspruch 4, wobei in dem Zustand, in welchem der erste Stempel (40) in den ersten Raum (S1) eingesetzt ist, der mittlere Abschnitt der gekrümmten Fläche (41) in einer Höhe angeordnet ist, welche niedriger ist als die Höhe einer oberen Fläche der Matrize (10).

6. Formvorrichtung nach Anspruch 1, wobei der Pressteil (30) im Vergleich zu einem Zustand, in welchem der erste Stempel (40) in den ersten Raum eingesetzt ist, in einem Zustand, in welchem der zweite Stempel (50) in den ersten Raum (S1) eingesetzt ist, einen höheren Druck ausübt.

7. Formvorrichtung nach Anspruch 1, wobei eine Höhendifferenz zwischen der Ebene (51) und der oberen Fläche der Matrize (10), wenn der zweite Stempel (50) in den ersten Raum (S1) eingesetzt ist, größer ist als eine Höhendifferenz zwischen der gekrümmten Fläche (41) und der oberen Fläche der Matrize, wenn der erste Stempel (40) in den ersten Raum eingesetzt ist.

8. Formvorrichtung nach Anspruch 1, ferner umfassend:

einen unteren Körper (60), welcher unterhalb der Matrize (10) angeordnet ist und in welchem ein dritter Raum (S3) definiert ist, welcher mit dem ersten Raum (S1) in Verbindung steht; eine flexible Tasche (63), welche in dem dritten Raum angeordnet ist und derart in den ersten Raum (S1) ausgedehnt ist, dass sie mit der Beutelfolie (F) in Kontakt ist; einen Taschenkörper (64), welcher dazu eingerichtet ist, den dritten Raum (S3) abzudichten, und mit welchem die flexible Tasche verbunden ist; und einen Unterpressteil (70), welcher dazu eingerichtet ist, durch ein Einführen oder ein Ablassen eines Fluids durch einen Durchgang (64a), welcher in dem Taschenkörper bereitgestellt ist, einen Innendruck der flexiblen Tasche zu steuern

9. Formverfahren zum Formen eines Becherteils (110) in einer Beutelfolie (F), wobei das Formverfahren umfasst:

einen Vorbereitungsprozess (S10), in welchem die Beutelfolie zwischen eine Matrize (10) und einen Abstreifer (20) eingesetzt wird; einen Fixierungsprozess (S20), in welchem der Abstreifer (20) die Beutelfolie (F) fixiert; und einen Pressprozess (S30), in welchem ein Pressteil (30) durch einen zweiten Raum (S2), welcher in dem Abstreifer gebildet ist, einen pneumatischen oder hydraulischen Druck auf die Beutelfolie ausübt, so dass ein Abschnitt der Beutelfolie in einen ersten Raum (S1) verlängert wird, welcher in der Matrize gebildet ist, wobei der Pressprozess (S30) umfasst:

einen primären Formprozess (S32), in welchem ein erster Stempel (40), welcher eine gekrümmte obere Fläche (41) aufweist, in den ersten Raum der Matrize eingesetzt wird und ein Abschnitt der Beutelfolie in dichtem Kontakt mit der gekrümmten Fläche ist, wobei die gekrümmte Fläche konvex nach oben gebildet ist; wobei das Formverfahren **dadurch gekennzeichnet ist, dass** es ferner einen sekundären Formprozess (S33) umfasst, in welchem ein zweiter Stempel (50), welcher eine ebene obere Fläche (51) aufweist, in den ersten Raum eingesetzt wird und ein Abschnitt der Beutelfolie in dichtem Kontakt mit der Ebene ist, wobei ein in dem sekundären Formprozess auf die Beutelfolie ausgeübter Druck größer ist als der in dem primären Formprozess auf die Beutelfolie ausgeübte Druck.

**Revendications**

1. Appareil de moulage pour mouler une partie coupelle (110) dans un film de poche (F), l'appareil de moulage comprenant :

une matrice (10) sur laquelle le film de poche (F) est posé sur une surface de dessus de celle-ci et dans laquelle un premier espace (S1) en retrait par rapport à la surface de dessus est défini ; un extracteur (20) qui est disposé au-dessus de la matrice pour fixer le film de poche et dans lequel un deuxième espace (S2) est défini à une position correspondant au premier espace ; et une partie de pression (30) configurée pour appliquer une pression pneumatique ou hydraulique au film de poche à travers le deuxième espace de sorte qu'une portion du film de poche soit allongée dans le premier espace, l'appareil de moulage comprenant :

un premier poinçon (40) configuré pour être inséré dans le premier espace (S1) et ayant une surface (41) incurvée qui est convexe vers le film de poche (F), l'appareil étant **caractérisé en ce qu'**il a

un second poinçon (50) configuré pour être inséré dans le premier espace (S1) et ayant un plan (51) faisant face au film de poche (F).

2. Appareil de moulage selon la revendication 1, dans lequel l'extracteur (20) est doté d'une partie de couverture (21) configurée pour sceller le deuxième espace (S2) sur un côté supérieur,

un passage (21a) à travers lequel la partie de pression (30) et le deuxième espace communiquent l'un avec l'autre est prévu dans l'extracteur ou la partie de couverture, et la partie de pression (30) commande une pression interne du deuxième espace en introduisant ou en évacuant un gaz à travers le passage.

3. Appareil de moulage selon la revendication 1, comprenant en outre :

un sac flexible (23) disposé dans le deuxième espace (S2) de manière à être en contact avec le film de poche (F) ; et

un corps de sac (24) qui est configuré pour sceller le deuxième espace, auquel le sac flexible est relié, et dans lequel un passage (24a) à travers lequel la partie de pression (30) et le sac flexible communiquent l'un avec l'autre est prévu,

dans lequel la partie de pression commande une pression interne du sac flexible en introduisant ou en évacuant un fluide à travers le passage.

4. Appareil de moulage selon la revendication 1, dans lequel la surface (41) incurvée a la portion centrale la plus haute et une hauteur qui diminue progressivement vers une circonférence intérieure du premier espace (S1).

5. Appareil de moulage selon la revendication 4, dans lequel, dans l'état dans lequel le premier poinçon (40) est inséré dans le premier espace (S1), la portion centrale de la surface (41) incurvée est disposée à une hauteur inférieure à celle d'une surface de dessus de la matrice (10).

6. Appareil de moulage selon la revendication 1, dans lequel la partie de pression (30) applique une pression plus élevée dans un état dans lequel le second poinçon (50) est inséré dans le premier espace (S1) par rapport à un état dans lequel le premier poinçon (40) est inséré dans le premier espace.

7. Appareil de moulage selon la revendication 1, dans lequel une différence de hauteur entre le plan (51) et la surface de dessus de la matrice (10) lorsque le second poinçon (50) est inséré dans le premier espace (S1) est plus grande qu'une différence de hauteur entre la surface (41) incurvée et la surface de dessus de la matrice lorsque le premier poinçon (40) est inséré dans le premier espace.

8. Appareil de moulage selon la revendication 1, comprenant en outre :

un corps inférieur (60) qui est disposé sous la matrice (10) et dans lequel un troisième espace (S3) communiquant avec le premier espace (S1) est défini ;

un sac flexible (63) disposé dans le troisième espace et déployé dans le premier espace (S1) de manière à être en contact avec le film de poche (F) ;

un corps de sac (64) qui est configuré pour sceller le troisième espace (S3) et auquel le sac flexible est relié ; et

une sous-partie de pression (70) configurée pour commander une pression interne du sac flexible en introduisant ou en évacuant un fluide à travers un passage (64a) prévu dans le corps de sac.

9. Procédé de moulage pour mouler une partie coupelle (110) dans un film de poche (F), le procédé de moulage comprenant :

un procédé de préparation (S10) dans lequel le film de poche est inséré entre une matrice (10) et un extracteur (20) ;

un procédé de fixation (S20) dans lequel l'extracteur (20) fixe le film de poche (F) ; et un procédé de pression (S30) dans lequel une partie de pression (30) applique une pression pneumatique ou hydraulique sur le film de poche à travers un deuxième espace (S2) formé dans l'extracteur de sorte qu'une portion du film de poche soit allongée dans un premier espace (S1) formé dans la matrice, dans lequel le procédé de pression (S30) comprend :

un procédé de moulage primaire (S32) dans lequel un premier poinçon (40) ayant une surface (41) de dessus incurvée est inséré dans le premier espace de la matrice, et une portion du film de poche est en contact étroit avec la surface incurvée, dans lequel la surface incurvée est formée de manière convexe vers le haut ; le procédé de moulage étant **caractérisé en ce qu'**il comprend en outre

un procédé de moulage secondaire (S33) dans lequel un second poinçon (50) ayant une surface de dessus plane (51) est inséré dans le premier espace, et une portion du film de poche est en contact étroit avec le plan,

dans lequel une pression appliquée au film de poche dans le procédé de moulage secondaire est plus grande que celle appliquée au film de poche dans le procédé de moulage primaire.

FIG.1

FIG.2

FIG.3

START

POUCH FILM IS INSERTED BETWEEN DIE AND STRIPPER — S10

STRIPPER FIXES POUCH FILM — S20

— S30

PRESSING PART PRESSES POUCH FILM — S31

FISRT PUNCH IS INSERTED INTO FIRST SPACE — S32

SECOND PUNCH IS INSERTED INTO FIRST SPACE, PRESSURE APPLIED TO THE POUCH FILM INCREASES — S33

END

FIG.4

FIG.5A

FIG.5B

FIG.5C

FIG.6

FIG.7

FIG.8

FIG.9

FIG.10

FIG.11

START

POUCH FILM IS INSERTED BETWEEN DIE AND STRIPPER — S10

STRIPPER FIXES POUCH FILM — S20

— S30'

FIRST FLEXIBLE BAG PRESSES POUCH FILM — S31'

SECOND FLEXIBLE BAG PRESSES POUCH FILM WITH HIGHER PRESSURE THAN THAT OF FIRST FLEXIBLE BAG — S32'

SECOND FLEXIBLE BAG PRESSES POUCH FILM WITH EQUAL PRESSURE THAN THAT OF FIRST FLEXIBLE BAG — S33'

END

FIG.12

FIG.13A

FIG.13B

FIG.13C

**EP 4 357 100 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H058291 A
- JP H0524104 A
- US 2020083493 A1